# EUROPÄISCHE PATENTSCHRIFT

(11) **EP 0 737 557 B1**
(45) Veröffentlichungstag und Bekanntmachung des Hinweises auf die Patenterteilung: **05.09.2001**
(21) Anmeldenummer: 96103702.5
(22) Anmeldetag: 09.03.1996
(51) Int. Cl.: B29C 45/14

(54) **Verfahren und Vorrichtung zur Herstellung eines Kugelgelenkes**
Method and apparatus for producing a ball joint
Procédé et dispositif pour fabriquer un joint à rotule

(30) Priorität: 11.04.1995 DE 19513693
(43) Veröffentlichungstag der Anmeldung: 16.10.1996
(73) Patentinhaber: TRW Fahrwerksysteme GmbH & Co. KG, 40547 Düsseldorf (DE)
(72) Erfinder: Dorr, Christoph, Dipl.-Ing., 40667 Meerbusch (DE)
(74) Vertreter: Stenger, Watzke & Ring Patentanwälte

(56) Entgegenhaltungen:
- GB-A- 976 410
- GB-A- 1 121 004

## Beschreibung

Die Erfindung betrifft ein Verfahren zur Herstellung eines aus Kugelzapfen und Gelenkgehäuse bestehenden Kugelgelenkes, insbesondere für Kraftfahrzeuge, wobei der eine polflächenfreie Gelenkkugel aufweisende Kugelzapfen in ein Spritzgießwerkzeug eingelegt wird. Desweiteren betrifft die Erfindung eine Vorrichtung zur Durchführung dieses Verfahrens.

Insbesondere für den Bau von Kraftfahrzeugen sind Kugelgelenke in vielfältigen Ausführungen bekannt. Sie bestehen jeweils aus einem Kugelzapfen und einem Gelenkgehäuse, in dem der Kugelzapfen begrenzt verschwenkbar und verdrehbar gelagert ist. Zwischen dem Gelenkgehäuse und der Kugel des Kugelzapfens ist üblicherweise eine Lagerschale angeordnet, um unabhängig von dem vorzugsweise aus Metall bestehenden Material des Gelenkgehäuses die gewünschte Werkstoffpaarung und Qualität des Kugelsitzes herzustellen.

Diese bekannten, mit einer Lagerschale versehenen Kugelgelenke haben den Nachteil, daß beim Einsetzen des Kugelzapfens in das Gelenkgehäuse eine elastische Verformung der Lagerschale und ggf. des Gelenkgehäuses erforderlich ist, um die notwendige Überdeckung der Lagerschale gegenüber dem Äquator der Lagerkugel herzustellen. Eine derartige Überdeckung ist erforderlich, um beim Auftreten von Belastungskomponenten in Längsrichtung des Lagerzapfens ein Herausreißen des Kugelzapfens aus dem Gelenkgehäuse zu verhindern.

Da auch die Montage der bekannten Kugelgelenke einen verhältnismäßig hohen Aufwand erfordert, ist bereits vorgeschlagen worden, das Gelenkgehäuse durch Umspritzen eines Kugelzapfens in einem Spritzgießwerkzeüg herzustellen, wobei die Gelenkkugel zuvor mit einer separat hergestellten Lagerschale versehen wird. Obwohl diese Lagerschale mit einem Preßsitz auf die Lagerkugel aufgesetzt wird, läßt sich nicht vermeiden, daß bei der Herstellung des Gelenkgehäuses unter Druck zugeführter Kunststoff zwischen Lagerkugel und Lagerschale eindringt und durch Ausfüllen der Hohlräume, insbesondere der abgeflachten Kugelpolfläche, das Kugelgelenk unbrauchbar macht. Wird ein für ein hochbelastbares Gehäuse nötiger faserverstärkter Kunststoff verwendet, würde auf diese Weise außerdem die Kugelschale keine Wirkung haben und überflüssig werden.

Auch ist bereits vorgeschlagen worden, eine Lagerschale durch Umspritzen der Gelenkkugel mir Kunststoff auszubilden. So sind aus der GB-A-1 121 004 ein Verfahren sowie eine Vorrichtung zur Herstellung eines Kugelgelenks bekannt, bei welchem in ein Spritzgießwerkzeug, welches entlang eines horizontalen Äquators der Gelenkkugel teilbar ist, der Kugelzapfen in eine Bohrung derart einsetzbar ist, daß entlang eines Kugelhorizonts eine Abdichtung erfolgt. Es wird sodann die Gelenkkugel umgehend in ein separat hergestelltes Gelenkgehäuse eingesetzt und nach dem Schließen des Spritzgießwerkzeugs durch Umspritzen mit Kunstoff eine Lagerschale gebildet.

Der Erfindung liegt die **Aufgabe** zugrunde, ein Verfahren und eine Vorrichtung zur Herstellung eines aus Kugelzapfen und Kunststoff-Gelenkgehäuse bestehenden Kugelgelenkes zu schaffen, die unter Vermeidung der voranstehenden Nachteile eine preiswerte Herstellung hochbelastbarer Kugelgelenke schaffen.

Die **Lösung** dieser Aufgabenstellung durch das erfindungsgemäße Verfahren ist dadurch gekennzeichnet, daß der Kugelzapfen durch einen Hohlraum des Spritzgießwerkzeuges auch gegenüber der Gelenkkugel unter Bildung eines Freiraumes für den maximalen Verschwenkwinkel des Kugelzapfens gegenüber dem Gelenkgehäuse abdichtenden Kernzug gehalten und durch unmittlelbares Umspritzen der Gelenkkugel mit Kunststoff das Gelenkgehäuse gebildet wird.

Mit dem erfindungsgemäßen Verfahren wird ein aus Kugelzapfen und Gelenkgehäuse bestehendes Kugelgelenk hergestellt, bei dem nicht nur eine umständliche Montage, sondern die gesamte Lagerschale entfällt. Hierdurch wird gleichzeitig die Gefahr beseitigt, daß Toleranzen bezüglich des Kugelsitzes, insbesondere Maßabweichungen von der Kugelform entstehen. Durch das unmittelbare Umspritzen der Gelenkkugel zur Bildung des Gelenkgehäuses ergibt sich somit ein gutes Tragbild und ein hoher Traganteil des Kugelgelenkes. Da sich durch den Entfall der Montage einer Lagerschale mit dem erfindungsgemäßen Verfahren eine hohe Überdeckung des hochfesten Gehäusewerkstoffes gegenüber dem Kugeläquator erzielen läßt, besitzt das nach dem erfindungsgemäßen Verfahren hergestellte Kugelgelenk eine hohe Ausreißfestigkeit des Kugelzapfens aus dem Gelenkgehäuse und damit einen erheblichen Vorteil gegenüber den bekannten Kugelgelenken mit elastischer und damit eine geringere Ausreißfestigkeit aufweisenden Lagerschalen. Da das erfindungsgemäß hergestellte Kugelgelenk eine geringe radiale und axiale Lagerelastizität aufweist, ist es sowohl als Axial- als auch als Radialgelenk geeignet. Durch Wegfall der Lagerschale läßt sich das erfindungsgemäße Kugelgelenk darüber hinaus mit geringeren Außenabmessungen des Gelenkgehäuses herstellen.

Gemäß einem weiteren Merkmal der Erfindung kann gleichzeitig mit dem Gelenkgehäuse auch dessen Anschlußstück bzw. eine komplette Fahrwerkstrebe im Spritzgießwerkzeug hergestellt werden. Weiterhin wird mit der Erfindung vorgeschlagen, bei der Herstellung des Gelenkgehäuses gleichzeitig eine die Öffnung des Gelenkgehäuses umgebende Nut zur Halterung eines Dichtungsbalges auszubilden.

Der mit einer polflächenfreien Gelenkkugel versehene Kugelzapfen wird gemäß einem weiteren Merkmal der Erfindung durch Anschweißen einer Kugel an der vertieften Stirnfläche des Zapfenteils hergestellt. Als Schweißverfahren kommt vorzugsweise das Impuls- oder Reibschweißen zur Anwendung. Erfindungsgemäß kann die Gelenkkugel vor dem Umspritzen mit einer reibungsmindernden Beschichtung versehen werden.

Die Vorrichtung zur Durchführung des erfindungsgemäßen Verfahrens verwendet ein Spritzgießwerkzeug, das einen dem Gelenkgehäuse mit Anschluß bzw. Fahrwerkstrebe entsprechenden Hohlraum aufweist und eine Führung für einen Kernzug bildet. Die erfindungsgemäße Ausbildung einer derartigen Vorrichtung ist dadurch gekennzeichnet, daß der gegenüber dem Spritzgießwerkzeug abgedichtet geführte Kernzug mit einer ringförmigen, an der Unterseite der Gelenkkugel abdichtend anliegenden Dichtfläche versehen ist, die am kegelstumpfförmigen, den Freiraum für den maximalen Schwenkwinkel des Kugelzapfens gegenüber dem Gelenkgehäuse bildenden Ende des Kernzuges ausgebildet ist.

Durch diese erfindungsgemäße Ausbildung ergibt sich ein einfaches und funktionssicheres Spritzgießwerkzeug, mit dem nicht nur das unmittelbar die Gelenkkugel umgebende Gelenkgehäuse, sondern gleichzeitig auch der Freiraum hergestellt wird, der notwendig ist, um den Kugelzapfen um den maximalen Schwenkwinkel gegenüber dem Gelenkgehäuse zu bewegen.

Bei einer bevorzugten Ausführung der Erfindung kann das Spritzgießwerkzeug in der Längsmitte des Gelenkgehäuses und des Kernzuges geteilt sein, wobei der Kern in der Werkzeugtrennebene mit einem Halbzylinder in je einer Werkzeughälfte liegt. So ist ohne weitere Kernzüge oder Schieber die Entformung des Kugelgelenkes mit angeformter Nut für den Dichtungsbalg und einem offenen Strebenprofil des Anschlußstückes möglich.

Gemäß einem weiteren Merkmal der Erfindung können in einer der Hälften des Spritzgießwerkzeuges Haltebolzen als Anlage für den Zapfenteil des Kugelzapfens angeordnet sein, um die notwendige Gegenkraft zu derjenigen Kraft aufzubringen, mit der die ringförmige Dichtfläche gegen die Unterseite der Gelenkkugel angedrückt wird, um beim Spritzgießen des Gelenkgehäuses ein Eindringen von Kunststoff in den Freiraum zu verhindern. Diese Gegenkraft kann alternativ auch durch einen Kern über den Gewindeabschnitt des Kugelzapfens aufgebracht werden

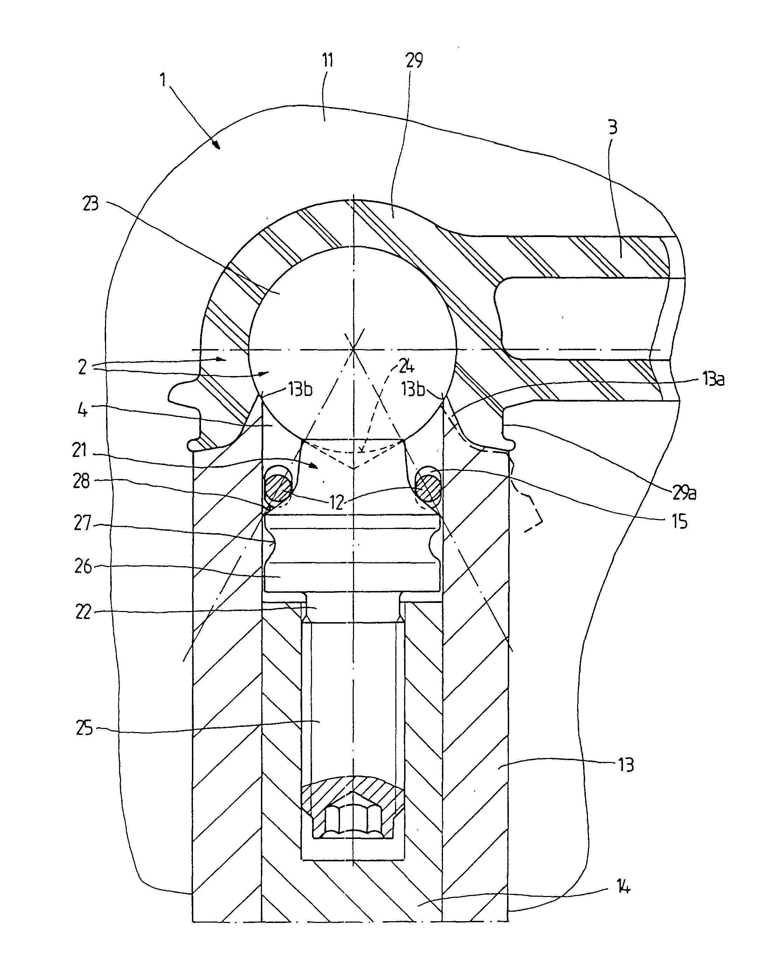

Auf der Zeichnung ist ein Ausführungsbeispiel der erfindungsgemäßen Vorrichtung in einem senkrechten Schnitt durch die Werkzeugtrennebene dargestellt. Anhand dieser Darstellung soll auch das erfindungsgemäße Verfahren nachfolgend erläutert werden.

Die Zeichnung zeigt lediglich schematisch einen Teil eines Spritzgießwerkzeuges 1, das zur Herstellung eines insbesondere für Kraftfahrzeuge bestimmten Kugelgelenkes 2 dient.

Dieses Kugelgelenk 2 besteht aus einem Kugelzapfen 21, der sich wiederum aus einem Zapfenteil 22 und einer Gelenkkugel 23 zusammensetzt. Die Gelenkkugel 23 wird durch eine polflächenfreie Kugel gebildet, die an die vertiefte Stirnfläche 24 des Kugelzapfens 21 durch Impulsschweißen oder Reibschweißen angeschweißt ist.

Der Zapfenteil 22 ist mit einem Gewindeabschnitt 25 versehen, an den sich in Richtung auf die Gelenkkugel 23 ein Bund 26 anschließt. In der zylindrischen Mantelfläche dieses Bundes 26 ist eine Ringnut 27 ausgebildet, die zur Aufnahme des verstärkten Randes eines auf der Zeichnung nicht dargestellten Dichtungsbalges dient. Zwischen dem Bund 26 und der vertieften Stirnfläche 24 hat der Kugelzapfen 21 einen kegelförmigen Übergang 28. Die Kugel 23 ist mit einer haftenden Gleitbeschichtung versehen, die während der ersten Schwenkbewegungen des Kugelzapfens 21 einen Schmierfilm und einen Schmierspalt erzeugt.

Das zur Lagerung der Gelenkkugel 23 des Kugelzapfens 21 dienende Gelenkgehäuse 29 ist beim Ausführungsbeispiel einstückig mit einem Anschlußstück 3 bzw. einer kompletten Fahrwerkstrebe ausgebildet. Um eine Verschwenkung des Kugelzapfens 21 um den maximalen, in der Zeichnung mit strichpunktierten Linien angedeuteten Verschwenkwinkels zu ermöglichen, ist innerhalb der Öffnung des Gelenkgehäuses 29 ein Freiraum 4 ausgebildet. Die rechte Endstellung des Kugelzapfens 21 ist gestrichelt angedeutet. Der den Freiraum 4 umgebende Rand des Gelenkgehäuses 29 ist mit einer Nut 29a versehen, die zur Aufnahme des anderen Endes des auf der Zeichnung nicht dargestellten Dichtungsbalges dient.

Zur Herstellung des Gelenkgehäuses 29 aus einem geeigneten Kunststoff wird der aus Zapfenteil 22 und Gelenkkugel 23 bestehende Kugelzapfen 21 in den Kern 14 des Spritzgießwerkzeuges 1 eingelegt, das beispielsweise in der Längsmitte des Gelenkgehäuses 29, d.h. in der Zeichenebene des Ausführungsbeispieles geteilt ist. Die Zeichnung läßt demgemäß nur eine Hälfte 11 des Spritzwerkzeuges 1 erkennen. In der anderen Hälfte 11 des Spritzgießwerkzeuges 1 sind zwei Haltebolzen 12 angeordnet, die durch Langlöcher 15 den Kernzug 13 bei geschlossenem Werkzeug durchdringen und an denen der Kugelzapfen 21 mit seinem kegelförmigen Übergang 28 zur Anlage kommt, wenn der Kernzug 13 zur Abdichtung in Richtung der Kugelzapfenachse nach oben in die dargestellte Endstellung gebracht wird.

Der Kernzug 13 ist rohrförmig ausgebildet und abgedichtet innerhalb einer Bohrung (gebildet aus zwei halbzylindern in je einer Formhälfte) im Spritzgießwerkzeug 1 geführt. Er umgibt den Zapfenteil 22 des Kugelzapfens 21 und hat ein kegelförmiges Ende 13a, welches mit seiner Außenkontur den Abschluß des Freiraumes 4 bildet. Mit einer ringförmigen Dichtfläche 13b liegt der Kernzug 13 in seiner in der Zeichnung dargestellten Endstellung an der Unterseite der Gelenkkugel 23 an. Die über diese Dichtfläche 13b auf die Gelenkkugel 23 ausgeübte Dichtkraft wird durch eine Gegenkraft aufgenommen, die vom Übergang 28 des Zapfenteils 22 über die Haltebolzen 12 auf das Spritzgießwerkzeug 1 übertragen wird.

Nach dem Einlegen des Kugelzapfens 21 in das Spritzgießwerkzeug 1 und die Überführung des Kernzuges 13 in die in der Zeichnung dargestellte Endposition wird Kunststoff in den Hohlraum des Spritzgießwerkzeuges 1 unter hohem Druck eingeführt, so daß sich das im Schnitt dargestellte Gelenkgehäuse 29 mit angeformtem Anschlußstück 3 bzw. angeformter Fahrwerkstrebe ergibt. Das auf diese Weise hergestellte Gelenkgehäuse 29 umgibt unmittelbar die Gelenkkugel 23 des Kugelzapfens 21, d.h. unter Fortfall einer Lagerschale. Nach dem Entlasten des Kernzuges 13, dem Öffnen des Werkzeuges 1 und damit Herausziehen der Haltebolzen 12 und dem Zurückziehen des Kernzuges 13 kann dem Spritzgießwerkzeug 1 somit ein fertigmontiertes Kugelgelenk entnommen werden. Durch das kegelstumpfförmige Ende 13a des Kernzuges 13 wird bei der Herstellung des Gelenkgehäuses 29 zugleich der Freiraum 4 geschaffen, der für das Verschwenken des Kugelzapfens 21 gegenüber dem Gelenkgehäuse 29 erforderlich ist. Der maximale Schwenkwinkel ist in der Zeichnung mit strichpunktierten Linien eingezeichnet.

Nach der Entnahme des fertigen Kugelgelenkes aus dem Spritzgießwerkzeug 1 ist es lediglich erforderlich, die Kugel durch Schwenken des Kugelzapfens gängig zu machen, den Freiraum 4 im Zapfenausschlag des Gehäuses 2 mit Schmiermittel zu versehen, und den auf der Zeichnung nicht dargestellten Dichtungsbalg mit seinem oberen Rand in die Nut 29a des Gelenkgehäuses 29 und mit seinem unteren Rand in die Ringnut 27 im Bund 26 des Kugelzapfens 21 einzusetzen. Danach ist das Kugelgelenk mit seinem einstückig an das Gelenkgehäuse 29 angeformten Anschlußstück 3 bzw. einer angeformten Fahrwerkstrebe einbaufertig.

### Bezugszeichenliste

- 1: Spritzgießwerkzeug
- 2: Kugelgelenk
- 3: Anschlußstück
- 4: Freiraum

- 11: Hälfte
- 12: Haltebolzen
- 13: Kernzug
- 13a: Ende
- 13b: Dichtfläche
- 14: Kern
- 15: Langloch

- 21: Kugelzapfen
- 22: Zapfenteil
- 23: Gelenkkugel
- 24: Stirnfläche
- 25: Gewindeabschnitt
- 26: Bund
- 27: Ringnut
- 28: Übergang
- 29: Gelenkgehäuse
- 29a: Nut

## Patentansprüche

1. Verfahren zur Herstellung eines aus Kugelzapfen (21) und Gelenkgehäuse (29) bestehenden Kugelgelenkes (2), insbesondere für Kraftfahrzeuge, wobei der eine polflächenfreie Gelenkkugel (23) aufweisende Kugelzapfen (21) in ein Spritzgießwerkzeug (1) eingelegt wird,
**dadurch gekennzeichnet**,
daß der Kugelzapfen durch einen Hohlraum des Spritzgießwerkzeuges (1) auch gegenüber der Gelenkkugel (23) unter Bildung eines Freiraumes (4) für den maximalen Verschwenkwinkel des Kugelzapfens (21) gegenüber dem Gelenkgehäuse (29) abdichtenden Kernzug (13) gehalten und durch unmittelbares Umspritzen der Gelenkkugel (23) mit Kunststoff das Gelenkgehäuse (29) gebildet wird.

2. Verfahren nach Anspruch 1, **dadurch gekennzeichnet**, daß gleichzeitig mit dem Gelenkgehäuse (29) auch dessen Anschlußstück (3) bzw. eine komplette Fahrwerkstrebe im Spritzgießwerkzeug (1) hergestellt wird.

3. Verfahren nach Anspruch 1 oder 2, **dadurch gekennzeichnet**, daß bei der Herstellung des Gelenkgehäuses (29) gleichzeitig eine die Öffnung des Gelenkgehäuses (29) umgebenden Nut (29a) zur Halterung eines Dichtungsbalges ausgebildet wird.

4. Verfahren nach einem der Ansprüche 1 bis 3, **dadurch gekennzeichnet**, daß der Kugelzapfen (21) mit einer polflächenfreien Gelenkkugel (23) durch Anschweißen einer Kugel an der vertieften Stirnfläche (24) des Zapfenteils (22) hergestellt wird.

5. Verfahren nach mindestens einem der Ansprüche 1 bis 4, **dadurch gekennzeichnet, daß** die Gelenkkugel (23) vor dem Umspritzen mit einer reibungsmindernden Beschichtung versehen wird.

6. Vorrichtung zur Durchführung des Verfahrens nach mindestens einem der Ansprüche 1 bis 5 mit einem Spritzgießwerkzeug (1), das einem dem Gelenkgehäuse (29) mit Anschluß (3) bzw. Fahrwerkstrebe entsprechenden Hohlraum aufweist und eine Führung für einen Kernzug (13) bildet,
**dadurch gekennzeichnet**,
daß der gegenüber dem Spritzgießwerkzeug (1) abgedichtet geführte Kernzug (13) mit einer ringförmigen, an der Unterseite der Gelenkkugel (23) abdichtend anliegenden Dichtfläche (13b) versehen ist, die am kegelstumpfförmigen, den Freiraum (4) für den maximalen Schwenkwinkel des Kugelzapfens (21) gegenüber dem Gelenkgehäuse (29) bildenden Ende (13a) des Kernzuges (13) ausgebildet ist.

7. Vorrichtung nach Anspruch 6, **dadurch gekennzeichnet**, daß das Spritzgießwerkzeug (1) in der Längsmitte des Gelenkgehäuses (29) und des Kernzuges (13) geteilt ist.

8. Vorrichtung nach Anspruch 7, **dadurch gekennzeichnet**, daß in einer der Hälften (11) des Spritzgießwerkzeuges (1) Haltebolzen (12) als Anlage für den Zapfenteil (22) des Kugelzapfens (21) angeordnet sind.

9. Vorrichtung nach Anspruch 6 oder 7, **dadurch gekennzeichnet**, daß der Kugelzapfen (21) an seinem Gewindeabschnitt (25) in axialer Richtung durch einen Kern (14) gehalten ist.

## Claims

1. Method of manufacturing a ball joint (2) comprising a ball-ended spindle (21) and a joint housing (29), in particular for motor vehicles, wherein the ball-ended spindle (21) having a pole-face-free joint ball (23) is inserted into an injection moulding die (1),
**characterized in**
**that** the ball-ended spindle is held by a core puller (13), which seals off a cavity of the injection moulding die (1) also from the joint ball (23) with simultaneous formation of a clearance (4) for the maximum pivoting angle of the ball-ended spindle (21) relative to the joint housing (29), and the joint housing (29) is formed by injection-moulding plastics material directly around the joint ball (23).

2. Method according to claim 1, **characterized in that** at the same time as the joint housing (29) its connection piece (3) and/or a complete chassis strut is also manufactured in the injection moulding die (1).

3. Method according to claim 1 or 2, **characterized in that** during manufacture of the joint housing (29) a groove (29a) surrounding the opening of the joint housing (29) is simultaneously formed for the purpose of mounting a bellows-type boot.

4. Method according to one of claims 1 to 3, **characterized in that** the ball-ended spindle (21) with a pole-face-free joint ball (23) is manufactured by welding a ball onto the recessed end face (24) of the spindle part (22).

5. Method according to at least one of claims 1 to 4, **characterized in that** the joint ball (23), before injection moulding is effected around it, is provided with an anti-attrition coating.

6. Apparatus for effecting the method according to at least one of claims 1 to 5 comprising an injection moulding die (1), which has a cavity corresponding to the joint housing (29) plus connection (3) and/or chassis strut and forms a guide for a core puller (13),
**characterized in**
**that** the core puller (13), which is guided in a sealed-off manner relative to the injection moulding die (1), is provided with an annular sealing face (13b), which rests sealingly against the underside of the joint ball (23) and is constructed on the truncated-cone-shaped end (13a) of the core puller (13) forming the clearance (4) for the maximum pivoting angle of the ball-ended spindle (21) relative to the joint housing (29).

7. Apparatus according to claim 6, **characterized in that** the injection moulding die (1) is divided in the longitudinal centre of the joint housing (29) and of the core puller (13).

8. Apparatus according to claim 7, **characterized in that** in one of the halves (11) of the injection moulding die (1) retaining pins (12) are arranged as a bearing device for the spindle part (22) of the ball-ended spindle (21).

9. Apparatus according to claim 6 or 7, **characterized in that** the ball-ended spindle (21) at its threaded portion (25) is supported in axial direction by a core (14).

## Revendications

1. Procédé de fabrication d'une articulation sphérique (2) consistant en une queue de rotule sphérique (21) et en un -logement d'articulation (29), notamment pour véhicules automobiles, procédé dans lequel la queue de rotule sphérique (21), présentant une rotule d'articulation (23) sans face polaire, est insérée dans un outil de moulage par injection (1),
**caractérisé en ce que** la queue de rotule sphérique est maintenue par un tire-noyau (13) rendant étanche une cavité de l'outil de moulage par injection (1), également par rapport à la rotule d'articulation (23), en formant un espace libre (4) pour l'angle maximal de pivotement de la queue de rotule sphérique (21) par rapport au logement d'articulation (29), et en ce que le logement d'articulation (29) est formé par recouvrement direct de la rotule d'articulation (23) par projection de matière plastique.

2. Procédé selon la revendication 1, **caractérisé en ce qu**'il est également fabriqué dans l'outil de moulage par injection (1), en même temps que le logement d'articulation (29), la pièce de raccordement (3) de celui-ci ou bien un tirant complet du châssis.

3. Procédé selon la revendication 1 ou 2,
**caractérisé en ce que**, lors de la fabrication du logement d'articulation (29), une rainure (29a) est simultanément formée, qui entoure une ouverture du logement d'articulation (29) et qui est prévue pour retenir un anneau d'étanchéité.

4. Procédé selon l'une des revendications 1 à 3,
**caractérisé en ce que** la queue de rotule sphérique (21) est fabriquée avec une rotule d'articulation (23) sans face polaire, par assemblage par soudage d'une rotule sur la face frontale (24) évidée de la partie formant queue (22).

5. Procédé selon au moins l'une des revendications 1 à 4, **caractérisé en ce que** la rotule d'articulation (23) est pourvue d'un revêtement antifriction avant d'être enrobée par projection.

6. Dispositif pour la mise en oeuvre du procédé selon au moins l'une des revendications 1 à 5, comprenant un outil de moulage par injection (1), qui présente une cavité correspondant au logement d'articulation- (29) avec raccordement (3) ou bien tirant de châssis, et qui constitue un guidage pour un tire-noyau (13),
**caractérisé en ce que** le tire-noyau (13), guidé de manière étanche par rapport à l'outil de moulage par injection (1), est pourvu d'une surface d'étanchéité (13b) annulaire et appliquée, de manière hermétique, contre le dessous de la rotule d'articulation (23), cette surface étant constituée au niveau de l'extrémité (13a) en forme de cône tronqué du tire-noyau (13), formant l'espace libre (4) pour l'angle maximal de pivotement de la queue de rotule sphérique (21) par rapport au logement d'articulation (29).

7. Dispositif selon la revendication 6, **caractérisé en ce que** l'outil de moulage par injection (1) est divisé en deux parties suivant l'axe central longitudinal du logement d'articulation (29) et du tire-noyau (13).

8. Dispositif selon la revendication 7, **caractérisé en ce qu**'il est prévu, dans l'une des moitiés (11) de l'outil de moulage par injection (1), des ergots de retenue (12), en tant que butées de support pour la partie formant queue (22) de la queue de rotule sphérique (21).

9. Dispositif selon la revendication 6 ou 7, **caractérisé en ce que** la queue de rotule sphérique (21) est maintenue dans le sens axial, au niveau de sa partie filetée (25), par un noyau (14).
